# EUROPEAN PATENT APPLICATION

(11) **EP 2 684 666 A1**
(43) Date of publication of application: **15.01.2014**
(21) Application number: 12754463.3
(22) Date of filing: 29.02.2012
(51) Int. Cl.: B29C 33/38, B29C 45/73, C08J 5/00, B29K 81/00

(54) **PRODUCTION METHOD FOR INJECTION-MOLDED ARTICLE AND INJECTION-MOLDED ARTICLE**

(30) Priority: 08.03.2011 JP 2011050878
(71) Applicant: Polyplastics Co., Ltd., Tokyo 108-8280 (JP)
(72) Inventor: MIYASHITA, Takayuki, Fuji-shi Shizuoka 416-8533 (JP); HIROTA, Shinichi, Fuji-shi Shizuoka 416-8533 (JP); TAKASHIMA, Masato, Fuji-shi Shizuoka 416-8533 (JP)
(74) Representative: Lux, Berthold
(86) International application number: PCT/JP2012/055049
(87) International publication number: WO 2012/121074

(57) **Abstract**

Provided is a method for manufacturing an injection-molded article, where the method is capable of obtaining a molded article having a high crystallinity while reducing the amount of flash generated and has excellent productivity. A polyarylene sulfide-based resin composition is injection-molded at a mold temperature of 100°C or less using a mold on the inner surface of which a heat-insulating layer constituted of porous zirconia is formed. It is preferable that the heat-insulating layer is formed by a spraying method. Preferably, the heat-insulating layer has a thermal conductivity of 2 W/(m•K) or less. Preferably, the heat-insulating layer has a thickness of no less than 200 µm.

## Description

### TECHNICAL FIELD

The present invention relates to a method for manufacturing an injection-molded article formed by injection-molding a polyarylene sulfide-based resin composition.

### BACKGROUND ART

Polyarylene sulfide (hereinafter abbreviated as "PAS") resin, represented by polyphenylene sulfide (hereinafter abbreviated as "PPS") resin, is excellent in heat resistance, mechanical properties, chemical resistance, dimensional stability, and flame resistance. Therefore, the PAS resin has been widely used as a material for parts of electrical or electronic devices, a material for parts of vehicle devices, a material for parts of chemical devices, etc., in particular for applications under high temperatures in usage environment.

However, the PAS resin exhibits a slow crystallization rate and a high glass transition temperature; therefore, the crystallinity of the surface of a molded article is unlikely to be enhanced, and the crystalline structure is likely to be locally nonuniform. For this reason, the surface of a molded article including PAS resin is likely to be nonuniform in terms of appearance as well as structure.

In addition, in the case that the crystallinity of the surface of a molded article is not enhanced, problems occur such as difficulty in ejection from the mold because of insufficient surface hardness, and problems occur such as roughening of the surface, dimensional change, and warpage because of increase in after-shrinkage, depending on the use environment of the molded article.

As a method for enhancing the crystallinity of the surface of a molded article, a method of setting the mold temperature at 140°C or more. However, elevation of mold temperature leads to a problem in that the amount of flash generated at parting surfaces of molds becomes large.

Furthermore, when the mold temperature is set at a temperature higher than 100°C, temperature control must be performed using oil. Temperature control using oil is complicated as compared to temperature control using water.

As other solutions, a method of using various kinds of crystallization promoters and/or plasticizers in combination with a PAS resin is known. For example, a method for adding an oligomer ester to PAS (Patent Document 1), a method for adding a thioether to PAS (Patent Document 2), a method for adding a carboxylic acid ester to PAS (Patent Document 3), a method for adding a certain phosphoric ester to PAS (Patent Documents 4, 5, etc.), etc. are known. It is said that the method described in Patent Documents 4, 5, etc. is highly effective in particular.

Mold temperature is typically set to a condition of above 100°C even in the methods for compounding additives described above. Furthermore, the method described in Patent Document 4, which is said to be highly effective, has a problem of insufficient thermal stability during melting at high temperatures. The method described in Patent Document 5 is excellent in thermal stability during melting at high temperatures, but has a problem that the phosphoric ester bleeds out due to continuous exposure of the molded article under high temperature (e.g., 180°C) circumstances.

Furthermore, a method for adding a polyphenylene ether resin (polyphenylene oxide resin) and a certain phosphorus compound to PAS resin is also known as a method for improving the surface, properties, or flame resistance of a molded article containing the PAS resin (Patent Document 6, etc.). However, even when the method described in Patent Document 6 is employed, the mold temperature condition must be set at 100°C or more. Moreover, there arise problems, in the method described in Patent Document 6, such as generation of gas during melting and molding, roughening of molded surface, or decrease of mechanical properties of a molded article, similarly as the method for adding a phosphoric ester described above.
Patent Document 1: Japanese Unexamined Patent Application, Publication No. S62-45654
Patent Document 2: Japanese Unexamined Patent Application, Publication No. S62-230849
Patent Document 3: Japanese Unexamined Patent Application, Publication No. S62-230848
Patent Document 4: Japanese Unexamined Patent Application, Publication No. H01-225660
Patent Document 5: Japanese Unexamined Patent Application, Publication No. 2003-335945
Patent Document 6: Japanese Unexamined Patent Application, Publication No. H07-145310

### DISCLOSURE OF THE INVENTION

### Problems to be Solved by the Invention

As described above, even when a method of compounding additives with a PAS resin is employed, the mold temperature condition must be set at 100°C or more, and thus a molded article having a high crystallinity cannot be stably obtained while reducing the amount of flash generated.

As described above, the mold temperature should be kept low for reducing the amount of flash generated, while the mold temperature should be set at a high condition for stably obtaining a molded article having a high crystallinity. Accordingly, it has been considered very difficult to reduce the amount of flash generated and to obtain a molded article having a high crystallinity.

Furthermore, in the manufacture of injection-molded articles, it is required to continuously perform injection molding for a long time to reduce the manufacturing costs of injection-molded articles.

The present invention has been made to solve the problems described above; and an object of the present invention is to provide a method for manufacturing an injection-molded article, where the method is capable of obtaining a molded article having a high crystallinity while reducing the amount of flash generated and has excellent productivity.

### Means for Solving the Problems

The present inventors have thoroughly investigated to solve the problems described above. As a result, the present inventors have found that the problems can be solved by injection-molding a polyarylene sulfide-based resin composition at a mold temperature of 100°C or less using a mold on the inner surface of which a heat-insulating layer constituted of porous zirconia is formed. More specifically, the present invention provides the following:
In a first aspect, a method for manufacturing an injection-molded article is provided, wherein a polyarylene sulfide-based resin composition is injection-molded at a mold temperature of 100°C or less using a mold on the inner surface of which a heat-insulating layer constituted of porous zirconia is formed.

According to a second aspect of the present invention, in the method for manufacturing an injection-molded article according to the first aspect, the heat-insulating layer has a thermal conductivity of 2 W/(m•K) or less.

According to a third aspect of the present invention, in the method for manufacturing an injection-molded article according to the first or second aspect, the heat-insulating layer is formed by a spraying method.

According to a fourth aspect of the present invention, in the method for manufacturing an injection-molded article according to any one of the first to third aspects, the heat-insulating layer has a thickness of no less than 200 µm.

According to a fifth aspect of the present invention, in the method for manufacturing an injection-molded article according to any one of the first to fourth aspects, the polyarylene sulfide-based resin composition includes a polyphenylene sulfide resin.

In a sixth aspect, an injection-molded article obtained by the manufacturing method according to any one of the first to fifth aspects is provided, wherein a crystallinity of the article measured by an X-ray diffraction method is 95 or more, where a crystallinity, measured by the X-ray diffraction method, of a molded article formed by injection-molding the polyarylene sulfide-based resin composition at a molding temperature of 140°C using a mold that does not include a heat-insulating layer is 100.

### Effects of the Invention

According to the present invention, a mold on the inner surface of which a heat-insulating layer constituted of porous zirconia is formed is used as the mold for injection molding. As a result, a molded article having a high crystallinity can be obtained even under a condition of a mold temperature of 100°C or less.

According to the present invention, the mold temperature can be set at 100°C or less. Accordingly, the temperature control of a mold can be performed using water. Furthermore, since the mold temperature is lower than heretofore, the amount of flash generated can be considerably reduced.

Particularly, in the present invention, a heat-insulating layer to be formed on the inner surface of the mold is constituted of porous zirconia. Zirconia has excellent durability against the action of compressive stress. Accordingly, the occurrence of defects such as deformation in the heat-insulating layer due to pressure applied to the heat-insulating layer during injection molding can be suppressed. As a result, the number of interruptions of molding due to defects of the heat-insulating layer can be considerably reduced.

### BRIEF DESCRIPTION OF THE DRAWINGS

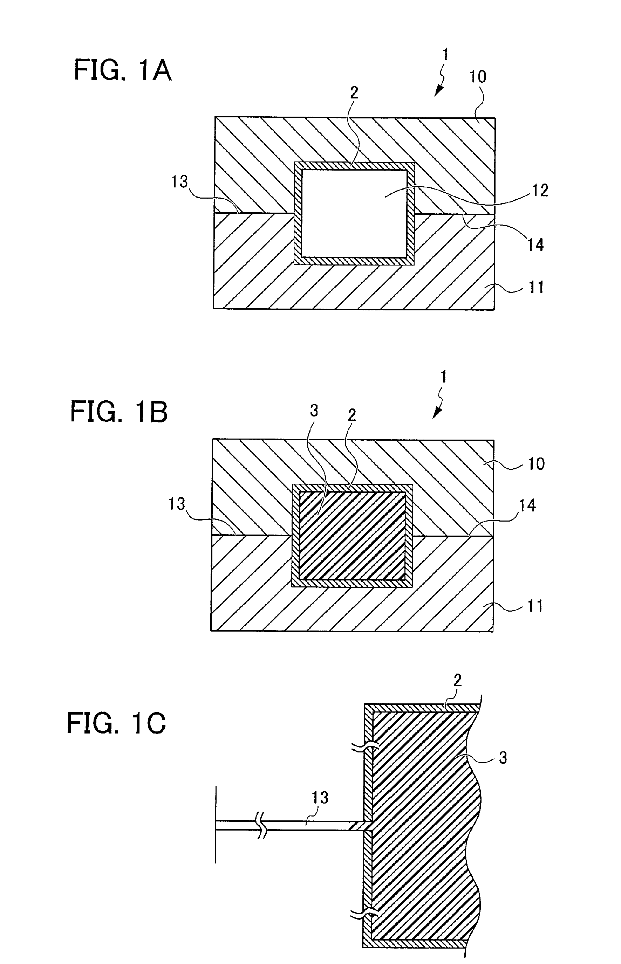

FIG. 1 is a cross-section view of a mold used in the method for manufacturing an injection-molded article of the present invention:
   1A is a cross-section view showing a condition in which a heat-insulating layer has been formed on a pair of divided molds that has been clamped;
   1B is a cross-section view showing a condition in which the PAS-based resin composition in a molten state has flowed into a cavity where a heat-insulating layer has been formed; and
   1C is an enlarged cross-section view of a part of parting surfaces of divided molds under a condition in which the PAS-based resin composition in a molten state has flowed into a cavity where a heat-insulating layer has been formed.

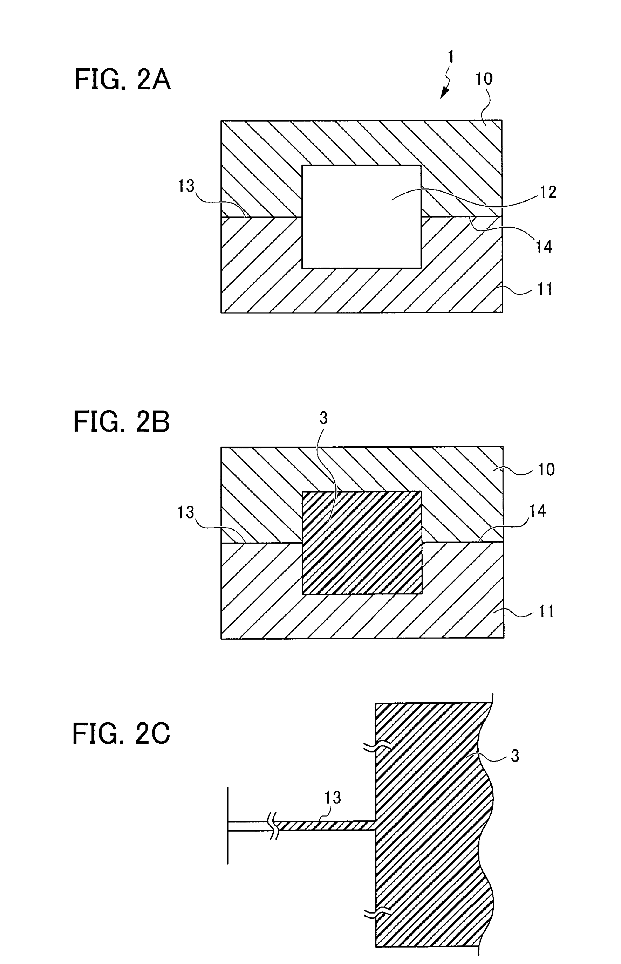

FIG. 2 is a cross-section view of a mold used in a method for manufacturing an injection-molded article of the prior art:
   2A is a cross-section view showing a condition in which a pair of divided molds has been clamped;
   2B is a cross-section view showing a condition in which the PAS-based resin composition in a molten state has flowed into a cavity where a heat-insulating layer has not been formed; and
   2C is an enlarged cross-section view of a part of parting surfaces of divided molds under a condition in which the PAS-based resin composition in a molten state has flowed into a cavity where a heat-insulating layer has not been formed.

### EXPLANATION OF REFERENCE NUMERALS

1: mold
10, 11: divided molds
12: cavity
13, 14: parting surfaces of divided molds
2: heat-insulating layer
3: PAS-based resin composition

### PREFERRED MODE FOR CARRYING OUT THE INVENTION

The present invention is explained with respect to embodiments thereof below. The present invention is not limited to the invention described below.

The present invention is a method for manufacturing an injection-molded article, in which injection molding is performed at a mold temperature of 100°C or less using a mold on the inner surface of which a heat-insulating layer constituted of porous zirconia is formed.

### Polyarylene Sulfide-based Resin Composition

The present invention solves the specific problems occurring when a resin composition containing a PAS resin, having a feature of a slow crystallization rate, is used as a raw material of an injection-molded article. The PAS resin contained in the resin composition to be a molding material is not particularly limited. For example, PAS resins below may be exemplified.

### PAS resin

The polyarylene sulfide resin contained in the resin composition is mainly constituted of -(Ar-S)- (wherein Ar is an arylene group) as a repeating unit. In the present invention, a PAS resin having a generally known molecular structure can be used.

The arylene group includes, but is not specifically limited to, for example, p-phenylene group, m-phenylene group, o-phenylene group, substituted phenylene group, p,p'-diphenylene sulfone group, p,p'-biphenylene group, p,p'-diphenylene ether group, p,p'-diphenylene carbonyl group, naphthalene group. Among arylene sulfide groups having the arylene groups, preference is given to a homopolymer using the same repeating units, as well as, depending on the use, a polymer comprising repeating units having heterogeneous arylene sulfide groups.

As the homopolymer, a homopolymer having a repeating unit of p-phenylene sulfide groups as the arylene group is preferable, although depending on the use. This is because the homopolymer with the p-phenylene sulfide group as the repeating unit has very high heat-resistance, and exhibits high strength, high stiffness and high dimensional stability over a wide temperature range. A molded article with very excellent properties can be obtained by using the homopolymer.

Among arylene sulfide groups having the arylene group, a combination of at least two different arylene sulfide groups can be used for a copolymer. Among these, a combination of p-phenylene sulfide group with m-phenylene sulfide group is preferable in view of obtaining a molded article with excellent properties in terms of heat-resistance, moldability, mechanical property, etc. A polymer comprising no less than 70 mol% of the p-phenylene sulfide group is more preferable, and a polymer comprising no less than 80 mol% of the p-phenylene sulfide group is even more preferable.

The PAS resin having the p-phenylene sulfide group and the m-phenylene sulfide group as repeating units is particularly demanded for increase of the crystallinity in a molded article, etc. The high crystallinity of a molded article can be achieved by using the method for manufacturing an injection-molded article of the present invention. Furthermore, the method for manufacturing an injection-molded article of the present invention may be free from problems in terms of workability and productivity. Here, the PAS resin having a phenylene sulfide group is a PPS (polyphenylene sulfide) resin.

### Other Components

The PAS-based resin composition used in the present invention may contain other resins within a range not hindering the effect of the present invention. In addition, compositions given desired properties by adding to the compositions additives such as nucleating agent, carbon black, pigment like inorganic calcined pigment, antioxidizing agent, stabilizing agent, plasticizer, lubricant, release agent, and flame retarder in order to impart desired properties to a molded article are also encompassed by the PAS-based resin composition used in the present invention.

### Properties of PAS-based Resin Composition

One of the features of the present invention is a lower amount of flash generated since the molten resin that penetrates between parting surfaces of molds immediately solidifies. A melt viscosity of the PAS-based resin composition changes variously depending on the use since the components in the resin composition vary depending on the use; however, the generation of flash can be sufficiently reduced even when the melt viscosity of the PAS-based resin composition is 300 Pa·s or less by using the manufacturing method of the present invention. Besides, as the melt viscosity, a value obtained by performing a measurement in accordance with ISO11443 is employed. More specifically, a value measured using a flat die of 1 mmϕ × 20 mmL as a capillary under conditions of a barrel temperature of 310°C and a shear rate of 1000 sec⁻¹ is employed.

### Method for Manufacturing an Injection-Molded article

The method for manufacturing an injection-molded article of the present invention is characterized in that a mold on the inner surface of which a heat-insulating layer constituted of porous zirconia is formed is used. Therefore, an explanation is given initially with respect to the mold used in the method for manufacturing an injection-molded article of the present invention.

### Mold

In the method for manufacturing an injection-molded article of the present invention, a mold on the inner surface of which (the surface inside the mold) a heat-insulating layer constituted of porous zirconia is formed is used. The heat-insulating layer formed on the inner surface of the mold inhibits release to outside the mold of the heat of a molten resin composition that has flowed into the mold. As a result, the PAS-based resin composition that has flowed into the mold is not easily solidified at or near the surface of the mold, and is therefore inhibited from being solidified without progression of crystallization even at a low mold temperature condition, so that an injection-molded article having a high crystallinity can be obtained.

The heat-insulating layer is constituted of porous zirconia. Porous zirconia can be suitably used as a heat-insulating layer because the thermal conductivity can be kept low owing to its porosity. Porosity means that a large number of bubbles exist in the inner part, and the bubbles in the inner part are filled with a gas such as air.

The structure of the bubbles has influences on the thermal conductivity of porous zirconia, on durability against the action of compressive stress on the molded article, and on the surface smoothness of the molded article. For example, when bubbles are unevenly distributed, the thermal conductivity of areas having a small number of bubbles is increased, so that suitable use as a heat-insulating layer may be impossible. In addition, when bubbles are unevenly distributed, areas having a high thermal conductivity and areas having a low thermal conductivity exist in the heat-insulating layer, and resultantly the crystallinity of the surface of the molded article cannot be equally enhanced. For example, when large bubbles are included in the heat-insulating layer, the mechanical strength may be locally reduced at or near the large bubbles, leading to deterioration of durability against compressive stress. In addition, when bubbles exist in a large amount at the surface of the zirconia layer, the problem arises that bubbles are transferred to the surface of the molded article to deteriorate the surface smoothness of the molded article.

Thus, it is preferred that the sizes of bubbles in the heat-insulating layer are almost uniform in the inner part of the heat-insulating layer, and most of bubbles in the inner part of the heat-insulating layer are small bubbles. An increase in density of the heat-insulating layer means a decrease in bubbles in the heat-insulating layer, and a decrease in density of the heat-insulating layer means an increase in bubbles in the heat-insulating layer. Therefore, the thermal conductivity of the heat-insulating layer tends to decrease when the density of the heat-insulating layer decreases, and the thermal conductivity of the heat-insulating layer tends to increase when the density of the heat-insulating layer increases. That is, by adjusting the density of the heat-insulating layer, the thermal conductivity of the heat-insulating layer can be adjusted. Accordingly, both surface smoothness and heat insulation can be achieved by forming a multi-layered structure in which the surface of the zirconia layer in contact with the molded article is composed of a layer having a small number of bubbles and a high density for the purpose of enhancing surface smoothness of the molded article, and the inner part is composed of a layer having a low density for the purpose of heat insulation. A method other than the method of forming a layer having a high density may be employed as long as surface smoothness can be enhanced. The above-described multi-layered structure includes both a structure in which the density is gradually changed and a structure in which the density is continuously changed.

The level to which the thermal conductivity of the heat-insulating layer is adjusted can be appropriately selected according to the use of the molded article, a type of the PAS-based resin, and the like. In the present invention, the thermal conductivity is preferably 2 W/m•K or less, more preferably 0.3 W/m·K to 2 W/m•K. A thermal conductivity of 2 W/m·K or less is preferable because an injection-molded article having a high crystallinity tends to be easily obtained even when the injection-molded article is molded at a mold temperature of 100°C or less. A thermal conductivity of 0.3 W/m·K or more is preferable because there is almost no possibility of significantly reducing productivity of the injection-molded article due to a decrease in strength of the heat-insulating layer, which results from an excessive increase in the number of bubbles in the heat-insulating layer. Particularly, a thermal conductivity of a heat-insulating layer of 0.7 W/m·K or more is preferable because a decrease in strength of the heat-insulating layer, which results from an excessive increase in the number of bubbles in the heat-insulating layer, can be kept at a very low level. As the above-described thermal conductivity, a value obtained by the measurement method described in Example is employed.

Zirconia contained in a raw material to form the heat-insulating layer is not particularly limited, and may be any of stabilized zirconia, partially stabilized zirconia and unstabilized zirconia. Stabilized zirconia, which is zirconia in which cubic zirconia is stabilized even at room temperature, is excellent in mechanical properties such as strength and toughness and wear resistance. Partially stabilized zirconia, which refers to a state in which tetragonal zirconia partially remains even at room temperature, undergoes martensitic transformation from the tetragonal system to the monoclinic system, inhibits growth of cracks spread due to tensile stress in particular, and has high rupture toughness. Unstabilized zirconia refers to zirconia which is not stabilized by a stabilizer. At least two selected from stabilized zirconia, partially stabilized zirconia, and unstabilized zirconia may be used in combination.

As a stabilizer contained in stabilized zirconia and partially stabilized zirconia, a conventionally known stabilizer can be employed. Examples thereof include yttria, ceria and magnesia. The amount of the stabilizer used is not particularly limited, and can be appropriately set according to the use, the material to be used, and so on.

A raw material to form the heat-insulating layer may further contain conventionally known additives and the like in addition to the above-described zirconia and stabilizer within a range of not hindering the effect of the present invention.

The method for forming a heat-insulating layer using the raw material is not particularly limited, but it is preferable to employ a spraying method. By employing the spraying method, the thermal conductivity of porous zirconia is easily adjusted to fall within a desired range. In addition, there is not a problem that the mechanical strength of the heat-insulating layer is considerably decreased due to formation of excessive bubbles in the inner part of porous zirconia, or the like. When the heat-insulating layer is formed by spraying as described above, the structure of the heat-insulating layer becomes suitable for the use of the present invention.

For example, formation of the heat-insulating layer by spraying can be performed in the following manner. First, a raw material is melted into a liquid. The liquid is accelerated to collide against the inner surface of a cavity. Lastly, the raw material, which collides against the inner surface of the cavity and is deposited thereon, is solidified. In this way, a very thin heat-insulating layer is formed on the inner surface of a mold. By further causing a molten raw material to collide onto the very thin heat-insulating layer and to be solidified, the thickness of the heat-insulating layer can be adjusted. For the method for solidifying a raw material, conventionally known cooling means may be used, or the raw material may be merely left standing and thereby solidified. The spraying method is not particularly limited, and a preferred method can be appropriately selected from arc spraying, plasma spraying, flame spraying and the like.

The above-described heat-insulating layer having a multi-layered structure can be produced by adjusting conditions for production of the heat-insulating layer. For example, when the heat-insulating layer is formed by the spraying method, the heat-insulating layer can be produced by adjusting conditions for depositing a molten raw material on the inner surface of the mold.

The thickness of the heat-insulating layer is not particularly limited, but is preferably 200 µm or more, more preferably 500 µm to 1000 µm. A thickness of 500 µm or more is preferable because the strength of the zirconia heat-insulating layer is enhanced. A thickness of the heat-insulating layer of 1000 µm or less is preferable because the molding cycle is not extended.

A heat-insulating layer constituted of porous zirconia as described above has high durability against a pressure applied to the heat-insulating layer during injection molding because it is constituted principally of zirconia. Therefore, defects of the heat-insulating layer, which are caused by the pressure, are difficult to occur. Accordingly, the number of interruptions of molding in the course of injection molding decreases, so that productivity of the injection-molded article is enhanced.

The effect on increasing the crystallinity of a molded article described above and the effect on reducing the amount of flash generated are simply explained with reference to figures. FIG. 1 is a schematic view showing a mold used in the method for manufacturing an injection-molded article of the present invention, and FIG. 2 is a schematic view showing a mold used in a conventional method for manufacturing an injection-molded article.

FIG. 1A shows a condition in which a heat-insulating layer has been formed on a pair of divided molds that has been clamped. As shown in FIG. 1A, the mold 1 consists of divided molds 10 and 11. As also shown in FIG. 1A, a pair of divided molds 10 and 11, which has been clamped, is equipped with a cavity 12 and parting surface 13 and 14 of the divided molds.

The "inner surface of a mold" indicates a wall surface of the cavity 12. In FIG. 1A, the heat-insulating layer 2 has been formed on the entire wall surface of the cavity 12. However, the heat-insulating layer 2 may be formed on a part of the wall surface as long as the effect of the present invention can be obtained. In the method for manufacturing an injection-molded article according to the present invention, it is necessary to form the heat-insulating layer 2 on at least the whole of the areas of the inner surface of the mold which are in contact with areas required to have a high crystallinity in the molded article obtained, and preferably the heat-insulating layer is formed on the whole of the inner surface of the mold. As apparent from FIGs. 1 and 2, the mold shown in FIG. 2 is the same as the mold shown in FIG. 1 except that the heat-insulating layer 2 has not been formed.

FIG. 1B shows a condition in which the PAS-based resin composition 3 in a molten state has flowed into a cavity 12 when the mold temperature is 100°C or less. According to the manufacturing method of the present invention, the heat of the PAS-based resin composition in a molten state is not easily released to outside the mold. As a result, the PAS-based resin composition at or near the wall surface of the cavity 12 does not easily cool down, so that crystallization of the PAS resin in the resin composition proceeds.

FIG. 2B shows a condition in which the PAS-based resin composition in a molten state has flowed into a cavity 12, where the heat-insulating layer has not been formed, when the mold temperature is 100°C or less. The heat-insulating layer has not been formed in the cavity 12 of molds used in the conventional manufacturing method. Accordingly, at a mold temperature of 100°C or less, heat of the PAS-based resin composition in a molten state is easily released to outside the mold, so that the PAS-based resin composition at or near the wall surface of the cavity 12 is rapidly cooled. A PAS resin, having a low crystallization rate, is solidified before crystallization proceeds, and therefore a molded-article having a high crystallinity cannot be obtained.

FIG. 1C shows an enlarged cross-section view near parting surfaces 13 of divided molds under a condition in which the PAS-based resin composition 3 in a molten state has flowed into a cavity 12 at a mold temperature of 100°C or less. As shown in FIG. 1C, the heat-insulating layer 2 has not been formed at the parting surfaces. Then the mold temperature is set to 100°C or less in the method for manufacturing an injection-molded article of the present invention. As a result, the PAS-based resin composition 3 in a molten state, which has flowed between the parting surfaces 13 and 14 of divided molds, immediately solidifies. Therefore, the amount of flash generated can be remarkably reduced according to the present invention.

FIG. 2C shows an enlarged cross-section view near the parting surface 13 of divided molds under a condition in which the PAS-based resin composition 3 in a molten state has flowed into a cavity 12 where a heat-insulating layer has not been formed when the mold temperature is above 140°C. The injection molding is performed with setting the mold temperature to a temperature of 140°C or more; however, solidification of the PAS-based resin composition penetrated between the parting surfaces 13 and 14 of divided molds is retarded when the mold temperature becomes higher. As a result, the amount of flash generated increases according to conventional manufacturing methods.

As described above, when the manufacturing method of the present invention is used, an injection-molded article having a high crystallinity can be obtained even when the mold temperature is set at 100°C or less. When the mold temperature is 100°C or less, temperature control of the mold can be performed using water. Accordingly, a molded article having a high crystallinity can be easily obtained by using the method for manufacturing an injection-molded article according to the present invention. Particularly, in the present invention, the mold temperature is preferably 60°C to 100°C. This is because the amount of flash generated can be considerably reduced while the crystallinity of the molded article is enhanced.

As to molding conditions other than the mold temperature, preferable conditions may be appropriately set depending on materials to be used and shapes of an injection-molded article.

### Injection-Molded article

As described above, an injection-molded article containing the PAS resin and produced by the manufacturing method of the present invention is sufficiently high in terms of the crystallinity. In the present invention, the "high crystallinity" means that although the mold temperature is 100°C or less, the crystallinity is at least comparable to that of a molded article produced using a mold which is set at a mold temperature of 140°C and in which a heat-insulating layer is not formed.

That is, the crystallinity (relative crystallinity), measured by the X-ray diffraction method, of an injection-molded article obtained by the manufacturing method of the present invention is 95 or more, where the crystallinity, measured by the X-ray diffraction method, of a molded article formed by injection-molding the polyarylene sulfide-based resin composition at a molding temperature of 140°C using a mold in which a heat-insulating layer is not formed is 100. Here, for the "mold in which a heat-insulating layer is not formed", specifically a mold in which a laminated layer is not formed may be used. An injection-molded article is manufactured using the mold, and the crystallinity of the injection-molded article may be derived and set to 100.

### EXAMPLES

The present invention is more specifically explained based on examples, but the present invention is not limited to the examples.

### Materials

PAS resin composition: polyphenylene sulfide resin composition (FORTRON 1140A64, by Polyplastics Co., Ltd.), melt viscosity measured in accordance with ISO 11443: 230 Pa·s
Raw material of heat-insulating layer: zirconia
Mold: mold for flat plate molding (40 mm (width) × 40 mm (length) × 1 mm (thickness)) (divided molds)

### Formation of Heat-Insulating Layer

A raw material constituted principally of zirconia was sprayed onto the inner surface of the mold by a spraying method. A heat-insulating layer having a multi-layered structure was formed on the inner surface of the mold with the surface of the heat-insulating layer adjusted to have a high density. Spraying was continued until the thickness of the heat-insulating layer reached a thickness of 500 µm as described in Table 1. In this manner, a mold 1 used in the manufacturing method of Example 1 was obtained. Molds 2 and 3 used in Examples 2 to 5 were produced in the same manner. A heat-insulating layer was not formed on the parting surface of the mold.

### Method for Calculation of Thermal Conductivity of Heat-Insulating Layer

The thermal conductivity of the heat-insulating layer was calculated from [thermal conductivity] = [thermal diffusivity × specific heat × specific gravity] with the thermal diffusivity measured by a laser flash method, the specific heat measured by DSC, and the specific gravity measured by water replacement method (in accordance with JIS Z8807 "Solid Specific Gravity Measurement Method"). Values of the thermal conductivity are shown in Table 1. The thermal conductivity (λ) of the heat-insulating layer having a multi-layered structure was determined as follows: the thermal conductivities of a layer having a low density and a layer having a high density are each determined, and calculation was performed using the equation of [1/λ] = [t/λl] + [(1-t)/λh] where the thermal conductivity of the layer having a low density is λl, the thermal conductivity of the layer having a high density is λh, and the ratio of the thickness of the layer having a low density to the thickness of whole heat-insulating layer is t.

### Example 1

An injection-molded article was manufactured using a PAS resin composition as a material for molding and using a mold 1 under molding condition 1 below.

### Molding Condition 1

Rotation number of screw: 100 rpm
Injection speed: 100 mm/sec
Mold temperature: 100°C

### Example 2

An injection-molded article was produced under the same molding condition 1 as that in Example 1 except that a mold 2 with a heat-insulating layer thickness changed to 250 µm was used.

### Example 3

An injection-molded article was produced under the same molding condition 1 as that in Example 1 except that a mold 2 with a heat-insulating layer thickness changed to 1000 µm was used.

### Example 4

An injection molded article was produced in the same manner as in Example 2 except that molding condition 1 was changed to molding condition 2.

### Molding Condition 2

The same condition as condition 1 except that the mold temperature is changed to 80°C.

### Example 5

An injection molded article was produced in the same manner as in Example 3 except that molding condition 1 was changed to molding condition 2.

### Comparative Example 1

An injection molded article was produced in the same manner as in Example 1 except that a mold 4 was used, in which a heat-insulating layer was not provided.

### Comparative Example 2

An injection-molded article was produced in the same manner as in Comparative example 1 except that molding condition 1 was changed to molding condition 2.

### Comparative Example 3

An injection-molded article was produced in the same manner as in Comparative example 1 except that molding condition 1 was changed to molding condition 3.

### [Molding Condition 3]

The same condition as condition 1 except that the mold temperature is changed to 140°C.

### Evaluation

For the injection-molded articles produced by the manufacturing methods of Examples 1 to 5 and Comparative Examples 1 to 3, the relative crystallinity using an X-ray diffraction method, the flash length and productivity were evaluated.

### Evaluation of Relative Crystallinity

First, the crystallinity of the injection-molded articles of Examples and crystallinity of the injection-molded articles of Comparative Examples were measured by an X-ray diffraction method. With the crystallinity of Comparative Example 3 set to 100, the relative crystallinity of the injection-molded articles of Examples 1 to 5 and the relative crystallinity of the injection-molded articles of Comparative Examples 1 and 2 were calculated.

Measurements of the crystallinity by the X-ray diffraction method were performed using wide-angle X-ray diffraction (reflection method). Specifically, the crystallinity was determined by the Ruland method.

### Evaluation of Flash Length

The flash length at four edges of a flat plate molded article of 40 mm (width) × 40 mm (length) × 1 mm (thickness) (injection-molded article obtained in each of Examples 1 to 5 and Comparative Examples 1 to 3) was measured by using a vision measuring machine to magnify the target, and the maximum value was defined as the flash length. The measurement results are shown in Table 1.

### Evaluation of Productivity

The flat plate molded articles of the Examples and Comparative Examples were continuously molded under the same conditions as those described above. Whether abrasion of the mold cavity was present or not was visually checked at intervals of 1000 shots. The number of molding at which abrasion of the mold cavity was first observed is shown in Table 1.

**[Table 1]**

| | Example 1 | Example 2 | Example 3 | Example 4 | Example 5 | Comparative Example 1 | Comparative Example 2 | Comparative Example 3 |
|---|---|---|---|---|---|---|---|---|
| Thickness of heat-insulating layer (µm) | 500 | 250 | 1000 | 250 | 1000 | 0 | 0 | 0 |
| Thermal conductivity of heat-insulating layer (W/m•K) | 0.96 | 0.96 | 0.96 | 0.96 | 0.96 | - | - | - |
| Mold temperature (°C) | 100 | 100 | 100 | 80 | 80 | 100 | 80 | 140 |
| Relative crystallinity | 100 | 102 | 103 | 100 | 101 | 73 | 46 | 100 |
| Flash length (mm) | 26 | 24 | 29 | 12 | 14 | 32 | 12 | 75 |
| Productivity | >10000 | >10000 | >10000 | >10000 | >10000 | 6000 | 6000 | 5000 |

As apparent from the results of Examples 1 to 5 shown in Table 1, the amount of flash generated can be reduced during molding along with providing a sufficient crystallinity. Furthermore, temperature control of the mold could be performed by water in Examples 1 to 5 since the mold temperature was 100°C or less

As is apparent from the results of Examples 1 to 5 and Comparative Example 3, in accordance with the manufacturing method of the present invention, the crystallinity can be as high as that achieved when a mold temperature of 140°C is used. The results demonstrate that, in accordance with the manufacturing method of the present invention, the crystallinity can be as high as that achieved when a mold temperature is 140°C, even when the mold temperature is 100°C or less.

## Claims

1. A method for manufacturing an injection-molded article, wherein a polyarylene sulfide-based resin composition is injection-molded at a mold temperature of 100°C or less using a mold on the inner surface of which a heat-insulating layer constituted of porous zirconia is formed.

2. The method for manufacturing an injection-molded article according to claim 1, wherein the heat-insulating layer has a thermal conductivity of 2 W/(m•K) or less.

3. The method for manufacturing an injection-molded article according to claim 1 or 2, wherein the heat-insulating layer is formed by a spraying method.

4. The method for manufacturing an injection-molded article according to any one of claims 1 to 3, wherein the heat-insulating layer has a thickness of no less than 200 µm.

5. The method for manufacturing an injection-molded article according to any one of claims 1 to 4, wherein the polyarylene sulfide-based resin composition includes a polyphenylene sulfide resin.

6. An injection-molded article obtained by the method according to any one of claims 1 to 5, wherein
a crystallinity of the article measured by an X-ray diffraction method is 95 or more,
where a crystallinity, measured by the X-ray diffraction method, of a molded article formed by injection-molding the polyarylene sulfide-based resin composition at a molding temperature of 140°C using a mold that does not include a heat-insulating layer is 100.
